(19) Europäisches Patentamt
European Patent Office
Office européen des brevets

(11) Veröffentlichungsnummer : **0 209 850 B1**

# (12) EUROPÄISCHE PATENTSCHRIFT

(45) Veröffentlichungstag der Patentschrift : 07.03.90

(51) Int. Cl.[5] : C 08 G 63/68, C 10 G 33/04

(21) Anmeldenummer : 86109807.7

(22) Anmeldetag : 17.07.86

## (54) Oxalkylierte Polyesteramine, Verfahren zu deren Herstellung und deren Verwendung.

(30) Priorität : 25.07.85 DE 3526601

(43) Veröffentlichungstag der Anmeldung : 28.01.87 Patentblatt 87/05

(45) Bekanntmachung des Hinweises auf die Patenterteilung : 07.03.90 Patentblatt 90/10

(84) Benannte Vertragsstaaten : AT BE CH DE FR GB IT LI NL SE

(56) Entgegenhaltungen :
EP-A- 0 035 263
EP-A- 0 144 975
US-A- 2 647 104
US-A- 3 009 884
US-A- 4 442 237

(73) Patentinhaber : HOECHST AKTIENGESELLSCHAFT
Postfach 80 03 20
D-6230 Frankfurt am Main 80 (DE)

(72) Erfinder : Hofinger, Manfred, Dr.
Hoher Göll Weg 7
D-8269 Burgkirchen (DE)
Erfinder : Böse, Willibald, Dr.
Kanalstrasse 3
D-8269 Burgkirchen (DE)
Erfinder : Hille, Martin, Dr.
In den Eichen 46
D-6237 Liederbach (DE)
Erfinder : Böhm, Roland
Fischbacher Strasse 29
D-6233 Kelkheim (Taunus) (DE)
Erfinder : Staiss, Friedrich
Odenwaldstrasse 21
D-6200 Wiesbaden (DE)

EP 0 209 850 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft oxalkylierte Polyesteramine, ein Verfahren zu deren Herstellung und deren Verwendung als Demulgatoren für Rohölemulsionen.

Bei der Förderung von Rohölemulsionen tritt eine zunehmende Verwässerung der geförderten Rohöle ein. Dieses mitgeförderte Wasser bildet mit dem Rohöl eine Wasser-in-Öl-Emulsion. In dem einemulgierten Wasser können Salze wie Natriumchlorid, Calciumchlorid und Magnesiumchlorid gelöst sein. Dieses Emulsionswasser muß vor dem Transport abgetrennt werden. In den Raffinerien wird vor der Destillation der Salzgehalt durch eine erneute Emulsionsbildung mit Süßwasser und Demulgierung weiter abgesenkt. Ein zu hoher Salzgehalt im Rohöl kann zu Störungen und Korrosion in den Raffinerien führen.

Ein Demulgator hat die Aufgabe, bei möglichst geringer Anwendungskonzentration die Emulsion zu brechen und bei diesem Separationsprozeß möglichst ohne oder mit minimaler zusätzlicher Aufwendung von Wärme eine vollständige Wasserabscheidung zu bewirken und den Salzgehalt auf ein Minimum zu reduzieren. Die Qualitätskriterien für geliefertes Rohöl sind das Restsalz und der Wassergehalt.

Die Rohöle sind je nach ihrer Provenienz unterschiedlich zusammengesetzt. Die natürlichen Emulsionsstabilisatoren besitzen einen komplizierten, differenzierten, chemischen Aufbau, für die gezielt Spalter entwickelt werden müssen. Durch verschiedene Förder- und Aufbereitungsbedingungen werden die Anforderungen, die an einen Demulgator gestellt werden, noch vielfältiger. Durch das ständige Erschließen neuer Rohölfelder und die Änderung der Förderbedingungen älterer Rohölfelder bleibt die Entwicklung optimaler Demulgatoren ein akutes Problem und es werden eine große Anzahl verschiedenartig aufgebauter Demulgatoren oder Demulgatormischungen benötigt.

Stickstoffhaltige Demulgatoren sind insbesondere aus der US-PS 3 009 884 bekannt. Dort werden oxalkylierte Polyalkylenpolyamine, verestert mit Polycarbonsäuren, unter anderen auch mit Dicarbonsäuren, beschrieben, die als Demulgatoren wirksam sind. Jedoch besitzen diese Verbindungen den Nachteil einer unzureichenden Hydrophobie, das heißt, ihre Öllöslichkeit ist zu gering. Da jedoch die Wirksamkeit von Demulgatoren für die Brechung von Rohölemulsionen von dem Grad der Anwesenheit an der Grenzfläche Öl/Wasser abhängt, ist diese Eigenschaft nachteilig, weil sich ein zu hoher Anteil des Demulgators über die gesamte wäßrige Phase verteilt.

Für den genannten Zweck stellt die vorliegende Erfindung verbesserte Mittel zur Verfügung. Es sind dies oxalkylierte Polyesteramine der allgemeinen Formel

$$HO\left[\overset{O}{\overset{\|}{C}}-R^5-\overset{O}{\overset{\|}{C}}-(\underset{R^2}{\underset{|}{OCH}}-CH_2)_a-\underset{R^1}{\underset{|}{N}}-(CH_2-\underset{R^2}{\underset{|}{CHO}})_b-\overset{O}{\overset{\|}{C}}-R^5-\overset{O}{\overset{\|}{C}}-O-R^3-O\right]_n H \qquad (I)$$

worin

$R^1$ ein Alkylrest oder Alkenylrest von 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

$R^3$ einen Alkylenrest der Formel $-(CH_2)_x$, in der x eine ganze Zahl von 1 bis 6 ist, oder einen Polyoxalkylenrest der Formel

$$-(CH_2-\underset{R^4}{\underset{|}{CH}}-O)_{c-1}(CH_2-\underset{R^4}{\underset{|}{CH}})-$$

in der $R^4$ H oder $CH_3$ ist und innerhalb der Kette, statistisch oder in Blöcken angeordnet, auch beide Bedeutungen annehmen kann und c eine ganze oder gebrochene Zahl von 2 bis 80 ist, bedeutet,

$R^5$ ein Alkylenrest der Formel $-(CH_2)_y-$, in der y eine ganze Zahl von 1 bis 8 bedeutet, wobei dieser Alkylenrest gegebenenfalls 1 bis 2 OH-Gruppen tragen kann oder ein Vinylenrest ist,

a und b, gleich oder verschieden, eine ganze oder gebrochene Zahl von 1 bis 15 ist, und

n eine ganze Zahl von 2 bis 50 ist.

In bevorzugten Ausführungsformen der Erfindung nehmen die Definitionen in der Formel I die folgende Bedeutung an : $R^1$ ist ein Alkylrest von 12 bis 18 C-Atomen ; $R^2$ ist H und a und b, gleich oder verschieden, sind ganze oder gebrochene Zahlen von 1 bis 8 ; $R^3$ ist der Rest eines Block-Mischpolymerisates, bestehend aus mindestens einem Block von Ethylenoxid-Einheiten und mindestens einem Block von Propylenoxid-Einheiten, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt ; $R^5$ ist ein Alkylenrest der Formel $-(CH_2)_y-$, worin y eine ganze Zahl von 1 bis 8 bedeutet ; und n ist eine ganze Zahl von 2 bis 20. Die Zahlen a, b, und c stellen Mittelwerte dar.

Die Verbindungen der Formel I werden hergestellt, indem man ein oxalkyliertes primäres Fettamin der Formel

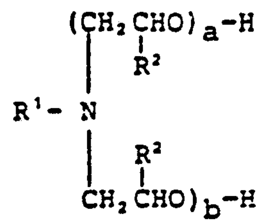

worin $R^1$, $R^2$, a und b die in Formel I angegebene Bedeutung haben, und eine Diolverbindung der Formel HO—$R^3$OH (III), worin $R^3$ die in Formel I angegebene Bedeutung hat, mit einer Dicarbonsäure der Formel

$$HOOC—R^5—COOH \qquad (IV)$$

worin $R^5$ die in Formel I angegebene Bedeutung hat, unter Polykondensation verestert, wobei das Molverhältnis von oxalkyliertem primärem Fettamin zu Diolverbindung 1 : 3 bis 3 : 1 beträgt und das Molverhältnis der Summe oxalkyliertes primäres Fettamin plus Diolverbindung zu Dicarbonsäure 0,8 : 1 bis 1 : 0,8 beträgt.

Bevorzugt werden das oxalkylierte primäre Fettamin und die Diolverbindung in einem Molverhältnis von 1 : 1 bis 3 : 1 eingesetzt. Das Molverhältnis der Summe der Mole oxalkyliertes primäres Fettamin plus Diolverbindung zu der Molzahl an Dicarbonsäure beträgt vorzugsweise 1 : 0,8 bis 1 : 0,95.

Die als Ausgangsverbindungen der Formel II dienenden oxalkylierten primären Fettamine werden erhalten nach bekannten Verfahren der Oxalkylierung von primären Fettaminen. Eine Übersicht über Methoden zur Herstellung dieser wohlbekannten Verbindungsklasse wird gegeben in Schönfeldt, « Surface Active Ethyleneoxide Adducts », Wissenschaftliche Verlagsgesellschaft, Stuttgart, 1976, Seiten 70 bis 73. Die oxalkylierten Produkte können Einheiten des Propylenoxids, vorzugsweise aber solche des Ethylenoxids oder aber Ketten aus beiden Einheiten tragen, wobei im letzteren Fall die beiden verschiedenen Einheiten in Blöcken angeordnet sind.

Bevorzugte primäre Amine, die zu Ausgangsverbindungen der Formel II oxalkyliert werden können, sind die technisch verfügbaren Produkte Stearylamin oder Cocosamin. Es ist aber gemäß der Erfindung ebensogut möglich, andere Monoamine mit mehr oder weniger breiter Alkylkettenverteilung oder auch Amine mit einheitlicher Kette zu verwenden. Es können auch Fettamine einzeln oder im Gemisch eingesetzt werden, deren Ketten eine oder mehrere Doppelbindungen enthalten, wie beispielsweise die Reste der Öl-, Elaidin-, Linol- oder Linolensäure.

Solche oxalkylierten Fettamine stellen eine stickstoffhaltige, veresterungsfähige Diolkomponente dar.

Im Gemisch damit wird eine weitere Diolverbindung eingesetzt, die keinen Stickstoff enthält. Dieses Diol der Formel HO—$R^3$—OH, worin $R^3$ einen Alkylenrest der Formel $—(CH_2)_x—$ bedeutet und darin x eine ganze Zahl von 1 bis 6 ist, wird repräsentiert beispielsweise durch Butan-1,4-diol oder Hexan-1,6-diol, durch Polyethylenglykole oder Polypropylenglykole oder durch Mischpolymerisate von Ethylen- und Propylenoxid, das heißt $R^3$ ist ein Rest der Formel

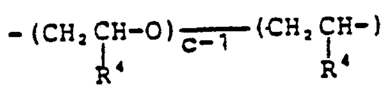

worin $R^4$ H oder $CH_3$ und c eine ganze oder gebrochene Zahl von 2 bis 80 ist. $R^4$ kann demgemäß auch innerhalb der Kette die Bedeutung von H und $CH_3$ annehmen, das heißt der Rest $R^3$ enthält Ethylenoxid- und Propylenoxid-Einheiten. Diese können statistisch angeordnet sein. Bevorzugt handelt es sich jedoch um Reste von Blockpolymerisaten, bestehend aus mindestens einem Block von Ethylenoxid-Einheiten und mindestens einem Block von Propylenoxid-Einheiten, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt.

Besonders bevorzugt sind Blockpolymerisate, in denen an einen Propylenoxid-Block beidseitig Ethylenoxid-Blöcke gebunden sind, wobei dafür die vorstehend angegebenen Gesamtzahlen an Einheiten gelten. Beide Diolkomponenten — der Formel II und der Formel III — werden mit einer Dicarbonsäure der Formel IV verestert.

Zur Veresterung geeignete Dicarbonsäuren sind aliphatische Dicarbonsäuren mit $C_1$- bis $C_8$-Alkylengruppen, wie Malonsäure, Bernsteinsäure, Glutarsäure, Adipinsäure, Sebacinsäure oder aliphatische Dicarbonsäuren, die durch 1 bis 2 OH-Gruppen substituiert sind, wie Äpfesäure, Tartronsäure, Weinsäure sowie ferner auch die Fumarsäure oder die Maleinsäure. Besonders geeignet sind die aliphatischen Dicarbonsäuren mit 4 bis 8 C-Atomen im Alkylenrest, also die homologe Reihe von der Adipin- bis zur Sebacinsäure. Bei der Veresterungsreaktion können auch Derivate solcher Dicarbonsäuren, insbesondere deren Ester und Säurehalogenide, eingesetzt werden.

Die unter Polykondensation verlaufende Veresterung der Verbindungen der Formel II und III erfolgt nach bekannten Methoden mit einer Dicarbonsäure der Formel IV in höhersiedenden inerten Lösungsmitteln, wie Toluol oder Xylol, oder bevorzugt ohne Lösungsmittel in der Schmelze und unter Abdeckung mit einem Schutzgas. Bei Veresterung in einem Lösungsmittel wählt man als Reaktionstemperatur zweckmäßigerweise die Rückflußtemperatur des Reaktionsgemisches und entfernt das gebildete Reaktionswasser durch azeotrope Destillation. Bei Veresterung in Substanz wird das Reaktionswasser direkt aus der Reaktionsmischung abdestilliert. Die Reaktionstemperaturen liegen hier bei 140 bis 220 °C, bevorzugt bei 150 bis 180 °C. Zur Beschleunigung der Reaktion verwendet man einen sauren Katalysator, wie zum Beispiel p-Toluolsulfonsäure oder hypophosphorige Säure. Die Vollständigkeit der Reaktion wird über die Bestimmung der Amin- und Säurezahl kontrolliert.

Die analytische Bestimmung des mittleren Polykondensationsgrades der erhaltenen Produkte und damit der mittleren Molmasse kann chromatographisch durch HPLC oder HPSEC erfolgen.

Die erfindungsgemäßen Produkte zeichnen sich durch eine ausgezeichnete Demulgierwirkung aus, wie in den Tabellen II bis IV gezeigt wird.

Die Erfindung wird durch folgende Beispiele erläutert :

Beispiel 1

a) Herstellung eines Polykondensationsproduktes aus Adipinsäure, Hexan-1,6-diol und einem Stearylamin, das mit 15 mol Ethylenoxid kondensiert ist

In einem 1 l-Reaktionskolben, versehen mit Wasserabscheider, Gaseinleitungsrohr und Heizung werden 451 g (0,5 mol) eines Stearylamins kondensiert mit 15 mol Ethylenoxid, 59,1 g (0,5 mol) Hexan-1,6-diol, 100,5 g (0,85 mol) Adipinsäure und 1,5 g 50 gew.-%ige hypophosphorige Säure vorgelegt, unter Stickstoff-Atmosphäre auf 160 °C gebracht und unter kontinuierlicher Wasserabscheidung die Veresterungsreaktion bei dieser Temperatur fortgesetzt.

Nach 20stündiger Reaktionszeit wird nach Bestimmung der Säure- und Aminzahl ein praktisch vollständiger Kondensationsumsatz ermittelt.

Unter den in Beispiel 1 beschriebenen Reaktionsbedingungen werden weiterhin die in der folgenden Tabelle I, Beispiele 2 bis 36, angegebenen Verbindungen der Formel I zur Umsetzung gebracht, wobei die aufgeführten Umsetzungsgrade erzielt werden :

(Siehe Tabelle I Seite 5 ff.)

Die in Tabelle I gebrauchten Abkürzungen haben folgende Bedeutung :
A = Stearylamin, kondensiert mit 2 mol Ethylenoxid
B = Stearylamin, kondensiert mit 3 mol Ethylenoxid
C = Stearylamin, kondensiert mit 5 mol Ethylenoxid
D = Stearylamin, kondensiert mit 8 mol Ethylenoxid
E = Stearylamin, kondensiert mit 10 mol Ethylenoxid
F = Stearylamin, kondensiert mit 15 mol Ethylenoxid
G = Oleylamin, kondensiert mit 12 mol Ethylenoxid
H = Talgfettalkylamin, kondensiert mit 2 mol Ethylenoxid
I = Talgfettalkylamin, kondensiert mit 10 mol Ethylenoxid
J = Cocosalkylamin, kondensiert mit 2 mol Ethylenoxid
K = Cocosalkylamin, kondensiert mit 5 mol Ethylenoxid
L = Cocosalkylamin, kondensiert mit 10 mol Ethylenoxid
M = Cocosalkylamin, kondensiert mit 2 mol Ethylenoxid und 5 mol Propylenoxid
N = Blockpolymeres aus 32 mol Propylenoxid und 4 mol Ethylenoxid
O = Blockpolymeres aus 32 mol Propylenoxid und 28 mol Ethylenoxid
P = Polypropylenglykol, Molgewicht 400
Q = Polyethylenglykol, Molgewicht 400
R = Hexan-1,6-diol

(Siehe Tabellen Seite 9 ff.)

Tabelle I

| Beispiel | Dicarbonsäure-komponente | Aminoxalkylat-komponente | Diol-komponente | Umsatzgrad zum Polyesteramin (in %) berechnet Säurezahl | Umsatzgrad zum Polyesteramin (in %) aus Aminzahl |
|---|---|---|---|---|---|
| | Menge (g) / Molverhältnis | | | | |
| 2 | Adipinsäure 64,6 / 0,85 | 90,5$^{A}$ / 0,5 | 460,2$^{N}$ / 0,5 | 94 | 100 |
| 3 | Adipinsäure 199 / 0,85 | 278$^{A}$ / 0,5 | 258$^{P}$ / 0,5 | 96 | 100 |
| 4 | Adipinsäure 49,7 / 0,85 | 69,5$^{A}$ / 0,5 | 631,7$^{O}$ / 0,5 | 95 | 100 |
| 5 | Adipinsäure 218,5 / 0,833 | 315$^{A}$ / 0,5 | 106,4$^{R}$ / 0,5 | 99 | 100 |
| 6 | Adipinsäure 121,7 / 0,83 | 174,8$^{A}$ / 0,5 | 201,1$^{Q}$ / 0,5 | 99 | 92 |
| 7 | Adipinsäure 91,3 / 0,833 | 233,4$^{B}$ / 0,8 | 60,0$^{Q}$ / 0,2 | 96 | 100 |
| 8 | Adipinsäure 39,3 / 0,83 | 68,3$^{C}$ / 0,5 | 274,2$^{N}$ / 0,5 | 88 | 100 |
| 9 | Adipinsäure 62,1 / 0,85 | 148,4$^{D}$ / 0,5 | 442,5$^{N}$ / 0,5 | 95 | 99 |
| 10 | Adipinsäure 82,7 / 0,85 | 290,4$^{D}$ / 0,75 | 433,1$^{O}$ / 0,25 | 92 | 100 |

Fortsetzung zu Tabelle I

| Beispiel | Dicarbonsäurekomponente | Aminoxalkylatkomponente | Diolkomponente | Umsatzgrad zum Polyesteramin (in %) berechnet Säurezahl | Umsatzgrad zum Polyesteramin (in %) aus Aminzahl |
|---|---|---|---|---|---|
| | Menge (g) / Molverhältnis | | | | |
| 11 | Adipinsäure 41,4 / 0,85 | D 48,4 / 0,25 | O 652,2 / 0,75 | 91 | 100 |
| 12 | Adipinsäure 121,7 / 0,83 | E 271,0 / 0,5 | Q 201 / 0,5 | 89 | 100 |
| 13 | Adipinsäure 124,3 / 0,85 | F 451 / 0,5 | Q 197 / 0,5 | 93 | 96 |
| 14 | Adipinsäure 49,7 / 0,85 | F 354 / 0,5 | N 180,4 / 0,5 | 95 | 100 |
| 15 | Adipinsäure 37,2 / 0,85 | F 135,3 / 0,5 | O 379 / 0,5 | 94 | 100 |
| 16 | Adipinsäure 100,5 / 0,85 | F 451 / 0,5 | R 59,1 / 0,5 | 99 | 100 |
| 17 | Adipinsäure 124,3 / 0,85 | F 450,9 / 0,5 | P 161,2 / 0,5 | 97 | 84 |
| 18 | Adipinsäure 174 / 0,85 | G 522,6 / 0,5 | R 82,7 / 0,5 | 100 | 96 |
| 19 | Adipinsäure 124,3 / 0,85 | G 373,3 / 0,5 | P 161,2 / 0,5 | 89 | 87 |
| 20 | Adipinsäure 124,3 / 0,85 | G 374 / 0,5 | Q 197 / 0,5 | 99 | 99 |

Fortsetzung zu Tabelle I

| Beispiel | Dicarbonsäurekomponente | Aminoxalkylatkomponente | Diolkomponente | Umsatzgrad zum Polyesteramin (in %) berechnet aus Säurezahl | Umsatzgrad zum Polyesteramin (in %) berechnet aus Aminzahl |
|---|---|---|---|---|---|
| | Menge (g) / Molverhältnis | Menge (g) / Molverhältnis | Menge (g) / Molverhältnis | | |
| 21 | Adipinsäure 248,5 / 0,85 | H 377,8 / 0,5 | R 118,2 / 0,5 | 99 | 100 |
| 22 | Adipinsäure 194,9 / 0,85 | H 302,2 / 0,5 | P 257,9 / 0,5 | 94 | 99 |
| 23 | Adipinsäure 161,6 / 0,85 | H 245,6 / 0,5 | Q 256,1 / 0,5 | 97 | 99 |
| 24 | Adipinsäure 174,0 / 0,85 | I 451,5 / 0,5 | Q 276,0 / 0,5 | 98 | 100 |
| 25 | Adipinsäure 149,1 / 0,85 | I 386,9 / 0,5 | P 193,4 / 0,5 | 89 | 100 |
| 26 | Adipinsäure 161,6 / 0,83 | I 454,6 / 0,5 | R 76,8 / 0,5 | 99 | 93 |
| 27 | Adipinsäure 82,7 / 0,85 | J 145,7 / 0,75 | O 433,1 / 0,25 | 99 | 89 |
| 28 | Adipinsäure 49,7 / 0,85 | J 29,1 / 0,75 | O 782,7 / 0,75 | 97 | 100 |
| 29 | Adipinsäure 36,6 / 0,83 | M 82,9 / 0,5 | O 377,4 / 0,5 | 98 | 100 |
| 30 | Adipinsäure 48,5 / 0,83 | K 70,3 / 0,5 | O 521,8 / 0,5 | 96 | 100 |

Fortsetzung zu Tabelle I

| Beispiel | Dicarbonsäure-komponente | Aminoxalkylat-komponente | Diol-komponente | Umsatzgrad zum Polyesteramin (in %) berechnet Säurezahl | Umsatzgrad zum Polyesteramin (in %) aus Aminzahl |
|---|---|---|---|---|---|
| | Menge (g) / Molverhältnis | Menge (g) / Molverhältnis | Menge (g) / Molverhältnis | | |
| 31 | Adipinsäure 121,7 / 0,833 | K 175,9 / 0,5 | Q 201 / 0,5 | 95 | 96 |
| 32 | Adipinsäure 99,3 / 0,85 | K 211 / 0,75 | N 340 / 0,25 | 99 | 99 |
| 33 | Adipinsäure 74,5 / 0,85 | K 158,3 / 0,75 | O 391,4 / 0,25 | 98 | 97 |
| 34 | Adipinsäure 74,5 / 0,85 | L 238,1 / 0,75 | O 391,3 / 0,25 | 93 | 100 |
| 35 | Adipinsäure 41,4 / 0,85 | L 44,1 / 0,25 | O 652,2 / 0,75 | 90 | 100 |
| 36 | Adipinsäure 69,4 / 1,0 | D 172,1 / 0,63 | O 258,7 / 0,22 | 97,5 | 99 |

Tabelle II

| | | |
|---|---|---|
| Ursprung der Rohölemulsion | : | Saudi Arabien |
| Wassergehalt der Emulsion | : | 36 Vol.-% |
| Salzgehalt der Rohölemulsion | : | 9,7 Gew.-% |
| Demulgiertemperatur | : | 60 °C |
| Dosiermenge | : | 32 ppm |

| Spaltertyp aus Beispiel | Wasserseparation in Vol.-% nach Minuten | | | | | Restsalzgehalt in Gew.-% in der Ölphase |
|---|---|---|---|---|---|---|
| | 10 | 20 | 30 | 40 | 60 | |
| 15 | 63 | 76 | 82 | 88 | 94 | 0,09 |
| 27 | 91 | 95 | 98 | 100 | 100 | 0,01 |
| 34 | 83 | 88 | 93 | 98 | 100 | 0,03 |
| 36 | 50 | 91 | 90 | 99 | 100 | 0,02 |
| Blindwert | 0 | 0 | 0 | 0 | 0 | 4,84 |

Tabelle III

| | | |
|---|---|---|
| Ursprung der Rohölemulsion | : | Nigeria |
| Wassergehalt der Rohölemulsion | : | 17,5 Vol.-% |
| Demulgiertemperatur | : | 45 °C |
| Dosiermenge | : | 55 ppm |

| Spaltertyp aus Beispiel | Wasserseparation in Vol.-% nach Minuten | | | | | Restwassergehalt in Vol.-% in der Ölphase |
|---|---|---|---|---|---|---|
| | 10 | 20 | 30 | 60 | 90 | |
| 15 | 60 | 81 | 91 | 100 | 100 | 0,04 |
| 27 | 89 | 93 | 98 | 100 | 100 | o,02 |
| 34 | 3 | 10 | 62 | 98 | 99 | 0,15 |
| 36 | 48 | 68 | 75 | 99 | 100 | 0,07 |
| Blindwert | 0 | 0 | 0 | 0 | 0 | 3,57 |

Tabelle IV

| | | |
|---|---|---|
| Ursprung der Rohölemulsion | : | Schleswig Holstein |
| Wassergehalt der Emulsion | : | 63 Vol.-% |
| Salzgehalt der Rohölemulsion | : | 14,8 Gew.-% |
| Demulgiertemperatur | : | 55 °C |
| Dosiermenge | : | 45 ppm |

| Spaltertyp aus Beispiel | Wasserseparation in Vol.-% nach Stunden | | | | | Restsalzgehalt in Gew.-% in der Ölphase |
|---|---|---|---|---|---|---|
| | 1 | 3 | 12 | 24 | 48 | |
| 15 | 71 | 74 | 88 | 98 | 99 | 0,11 |
| 27 | 79 | 84 | 91 | 99 | 100 | 0,07 |
| 34 | 5 | 11 | 64 | 99 | 100 | 0,09 |
| 36 | 22 | 45 | 74 | 97 | 99 | 0,18 |
| Blindwert | 0 | 0 | 0 | 1 | 3 | 7,65 |

**Patentansprüche**

1. Oxalkylierte Polyesteramine der allgemeinen Formel

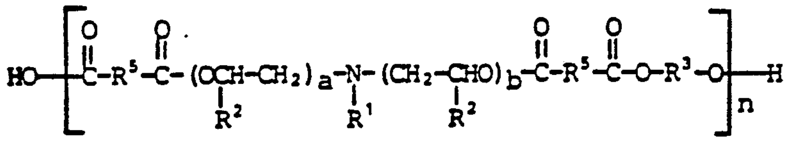

(I)

worin

$R^1$ ein Alkylrest oder Alkenylrest von 8 bis 23 C-Atomen ist,

$R^2$ H oder $CH_3$ ist und innerhalb der Kette des Polyoxalkylenrestes, in Blöcken angeordnet, auch beide Bedeutungen annehmen kann,

$R^3$ einen Alkylenrest der Formel $-(CH_2)_x$, in der x eine ganze Zahl von 1 bis 6 ist, oder einen Polyoxalkylenrest der Formel

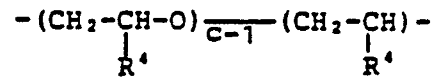

in der $R^4$ H oder $CH_3$ ist und innerhalb der Kette, statistisch oder in Blöcken angeordnet, auch beide Bedeutungen annehmen kann und c eine ganze oder gebrochene Zahl von 2 bis 80 ist, bedeutet,

$R^5$ ein Alkylenrest der Formel $-(CH_2)_y-$, in der y eine ganze Zahl von 1 bis 8 bedeutet, wobei dieser Alkylenrest gegebenenfalls 1 bis 2 OH-Gruppen tragen kann oder ein Vinylenrest ist,

a und b, gleich oder verschieden, eine ganze oder gebrochene Zahl von 1 bis 15 ist, und

n eine ganze Zahl von 2 bis 50 ist.

2. Oxalkylierte Polyesteramine gemäß Anspruch 1, dadurch gekennzeichnet, daß $R^1$ ein Alkylrest von 12 bis 18 C-Atomen ist.

3. Oxalkylierte Polyesteramine gemäß Anspruch 1 und 2, dadurch gekennzeichnet, daß $R^2$ H ist und a und b, gleich oder verschieden, eine ganze oder gebrochene Zahl von 1 bis 8 ist.

4. Oxalkylierte Polyesteramine gemäß einem oder mehreren der Ansprüche 1 bis 3, dadurch gekennzeichnet, daß $R^3$ der Rest eines Blockmischpolymerisates, bestehend aus mindestens einem Block von Ethylenoxid-Einheiten und mindestens einem Block von Propylenoxid-Einheiten ist, wobei die Gesamtzahl der Ethylenoxid-Einheiten eine ganze oder gebrochene Zahl von 15 bis 35, die der Propylenoxid-Einheiten eine solche von 20 bis 40 ist und die Summe aus beiden höchstens 60 beträgt.

5. Oxalkylierte Polyesteramine gemäß einem oder mehreren der Ansprüche 1 bis 4, dadurch gekennzeichnet, daß $R^5$ ein Alkylenrest der Formel $-(CH_2)_y-$ ist, worin y eine ganze Zahl von 1 bis 8 bedeutet.

6. Oxalkylierte Polyesteramine gemäß einem oder mehreren der Ansprüche 1 bis 5, dadurch gekennzeichnet, daß n eine ganze Zahl von 2 bis 20 ist.

7. Verfahren zur Herstellung von oxalkylierten Polyesteraminen der Formel I gemäß Anspruch 1, dadurch gekennzeichnet, daß ein oxalkyliertes primäres Fettamin der Formel

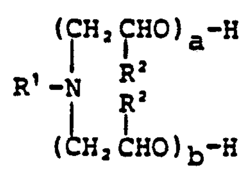

(II)

in der $R^1$, $R^2$, a und b die in Formel I angegebenen Bedeutungen haben, und eine Diolverbindung der Formel

$$HO-R^3-OH \qquad (III)$$

in der $R^3$ die in Formel I angegebene Bedeutung hat, mit einer Dicarbonsäure der Formel

$$HOOC-R^5-COOH \qquad (IV)$$

in der $R^5$ die in Formel I angegebene Bedeutung hat, unter Polykondensation verestert wird, wobei das Molverhältnis von oxalkyliertem primärem Fettamin zu Diolverbindung 1 : 3 bis 3 : 1 beträgt und das Molverhältnis der Summe oxalkyliertes primäres Fettamin plus Diolverbindung zu Dicarbonsäure 0,8 : 1 bis 1 : 0,8 beträgt.

8. Verwendung der Verbindungen gemäß Anspruch 1 als Demulgatoren für die Spaltung von Rohölemulsionen.

## Revendications

1. Polyesteramines alcoxylées de formule générale

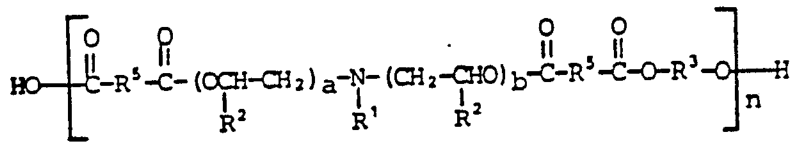 (I)

dans laquelle

$R^1$ est un radical alkyle ou un radical alcényle ayant de 8 à 23 atomes de carbone,

$R^2$ est H ou $CH_3$ et, à l'intérieur de la chaîne du résidu polyoxyalkylène, disposé en séquences, peut aussi prendre les deux significations,

$R^3$ est un radical alkylène de formule $-(CH_2)_x-$, où x est un nombre entier de 1 à 6, ou un radical polyoxyalkylène de formule

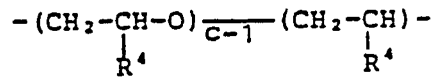

dans laquelle $R^4$ est H ou $CH_3$ et, à l'intérieur de la chaîne, disposé d'une manière statistique ou en séquences, peut aussi prendre les deux significations, et c est un nombre entier ou fractionnaire de 2 à 80,

$R^5$ est un radical alkylène de formule $-(CH_2)_y-$, dans laquelle y est un nombre entier de 1 à 8, ce radical alkylène pouvant éventuellement porter 1 ou 2 groupes OH, ou encore est un radical vinylène,

a et b, identiques ou différents, représentent chacun un nombre entier ou fractionnaire de 1 à 15, et

n est un nombre entier de 2 à 50.

2. Polyesteramines alcoxylées selon la revendication 1, caractérisées en ce que $R^1$ est un radical alkyle ayant de 12 à 18 atomes de carbone.

3. Polyesteramines alcoxylées selon les revendications 1 ou 2, caractérisées en ce que $R^2$ est H, et a et b, qui sont identiques ou différents, représentent chacun un nombre entier ou fractionnaire de 1 à 8.

4. Polyesteramines alcoxylées selon l'une ou plusieurs des revendications 1 à 3, caractérisées en ce que $R^3$ est le résidu d'un copolymère séquencé constitué d'au moins une séquence de motifs oxyde d'éthylène et d'au moins une séquence de motifs oxyde de propylène, le nombre total des motifs oxyde d'éthylène étant un nombre entier ou fractionnaire de 15 à 35, le nombre total des motifs oxyde de propylène étant un nombre entier ou fractionnaire de 20 à 40, la somme des deux étant au plus de 60.

5. Polyesteramines alcoxylées selon l'une ou plusieurs des revendications 1 à 4, caractérisées en ce que $R^5$ est un radical alkylène de formule $-(CH_2)_y-$ où y est un nombre entier de 1 à 8.

6. Polyesteramines alcoxylées selon l'une ou plusieurs des revendications 1 à 5, caractérisées en ce que n est un nombre entier de 2 à 20.

7. Procédé pour la préparation de polyesteramines alcoxylées de formule I selon la revendication 1, caractérisé en ce qu'on estérifie sous polycondensation une amine grasse primaire alcoxylée de formule

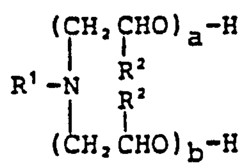 (II)

dans laquelle $R^1$, $R^2$, a et b ont les significations données dans la formule I, et un composé diol de formule

$$HO-R^3OH \qquad (III),$$

dans laquelle $R^3$ a les significations données dans la formule I, avec un acide dicarboxylique de formule

$$HOOC-R^5-COOH \qquad (IV)$$

dans laquelle $R^5$ a les significations données dans la formule I, le rapport en moles entre l'amine grasse primaire alcoxylée et le composé diol étant de 1 : 3 à 3 : 1, et le rapport en moles entre la somme de l'amine grasse primaire alcoxylée et du composé diol d'une part, l'acide dicarboxylique d'autre part, étant de 0,8 : 1 à 1 : 0,8.

8. Utilisation des composés selon la revendication 1 en tant que désémulsifiants pour la désémulsification des émulsions de pétrole brut.